# EUROPEAN PATENT SPECIFICATION

(11) **EP 1 116 908 B1**
(45) Date of publication and mention of the grant of the patent: **06.05.2004**
(21) Application number: 99932897.4
(22) Date of filing: 29.06.1999
(51) Int. Cl.: F16K 29/00, F16K 31/50, F16K 31/54, F16K 1/02

(54) **VALVE INTENDED TO BE USED IN ALUMINA PRODUCTION PLANTS**
VENTIL FÜR ANLAGEN ZUR ALUMINIUMPRODUKTION
SOUPAPES DESTINEE A DES INSTALLATIONS DE PRODUCTION D'ALUMINE

(43) Date of publication of application: 18.07.2001
(73) Proprietor: Ampo, S. Coop., 20213 Idiazabal (ES)
(72) Inventor: GONI USABIAGA, Juan José, E-20200 Beasain (Guipúzcoa) (ES)
(74) Representative: Carpintero Lopez, Francisco
(86) International application number: PCT/ES1999/000196
(87) International publication number: WO 2001/001027

(56) References cited:
- US-A- 2 177 265
- US-A- 3 220 431
- US-A- 3 505 888
- US-A- 4 346 728
- US-A- 4 465 091
- US-A- 4 760 989

## Description

### OBJECT OF THE INVENTION

The present invention relates to a valve of those employed in alumina producing plants, valve which as well as meeting its function as an opening/shutting element, is equipped with self-cleaning means which assures a perfect fit and consequently a perfect seal, between the valve gate and its corresponding seat, according to the preamble of claim 1. A valve disclosing these features is known from US 3 220 431.

### BACKGROUND OF THE INVENTION

It is well known that aluminium is obtained by electrolysis, from bauxite, it being necessary for the bauxite to pass through different stages or steps in processing prior to obtaining alumina and subsequently aluminium.

In the plants where these processes are carried out, ducts exist which are equipped with valves, which must be periodically subjected to a cleaning phase because the bauxite adheres in an irregular manner both to the valve seat and to the gate itself, forming sediment which with time impairs the sealing of the closure.

Generally speaking these valves have an elbow-shaped construction, in such a manner that the valve gate is extended on a shaft which traverses the valve body and is terminated in a spindle having a complementary nut, so that said nut, through whatever means of conventional operation, provides the spindle with the necessary axial motion for carrying out valve opening/shutting, to which end said spindle must be conveniently immobilised in the angular sense.

Conventionally the periodical cleaning of the valve is carried out by hand, after it has been dismantled, which clearly involves an interruption in the process of producing alumina, with the consequent repercussion that this implies.

In an endeavour to overcome this problem the applicant himself is holder of the PCT with application number ES 98/00146, in which the use was foreseen of a blocking collar capable of being manually coupled to and decoupled from the valve assembly, in such a manner that through said collar and with the valve in a shut position, the nut and the spindle could be blocked, with an accompanying release of the spindle in the angular sense, in such a manner that the rotary movement applied to the nut, instead of being converted into an axial displacement of the spindle, was directly transmitted to said spindle, whereby the gate, instead of being retracted with respect to the valve seat, turned with respect to the latter producing a friction effect and the consequent elimination of bauxite deposits or scale, that is, a valve self-cleaning effect was obtained, with no need to proceed to the dismantling of the valve body.

This solution in addition to requiring a manual intervention for the coupling/decoupling of the blocking collar, meant that in a situation of keying of the nut to the spindle, that is, in the cleaning phase, the spindle could not be advanced, so that the duration of the cleaning operation became longer as the depth of the scale became deeper, since after a first friction application, in which the surface layer of the scale was removed, the friction effect between gate and seat likewise disappeared, it being necessary to dismantle the blocking collar, re-adjust the gate to the seat and re-couple the blocking collar, it even being necessary for the operation to be repeated several times, depending on, as already stated, the depth of the scaling.

### DESCRIPTION OF THE INVENTION

The valve for alumina production plants in accordance with the invention is defined in claim 1. Accordingly, the valve is based on the same principle of self-cleaning through friction, by rotation of the gate against the valve seat, and overcomes the aforementioned problem in a fully satisfactory manner, permitting complete automation of the cleaning process, with optimum results.

To this end, in a more specific way and based on a conventional valve body with its pertinent valve seat and gate. the latter in association with a shaft capable of undergoing a movement of axial displacement by means of a spindle-nut mechanism, the valve of the invention centres its characteristics on the fact that in said spindle two coaxial sectors are established, one constituting the spindle itself, axially displaceable with the collaboration of the corresponding and aforesaid nut, and another constituting the gate supporting shaft, with the particularity that these two elements, shaft and spindle, are inter-coupled with the assistance of a sleeve which, immobilising one with respect to the other in the axial sense, permits however the free rotation of the shaft with respect to the spindle.

Complementing the structure described the sleeve mentioned is conveniently keyed to another external sleeve, through which the internal sleeve and consequently the shaft to which the gate is joined and the gate itself, can undergo a rotation, at the cost of second driving element, without the latter in any way affecting the spindle, whereby the latter can turn freely with respect to the shaft, as has already been stated.

However, the key that connects the two sleeves mentioned has to lie in a groove in one of them, preferentially the internal sleeve, of sufficient length to permit the relative axial movement between the two sleeves corresponding to the change from one of the limiting positions to the other of the gate with respect to the valve seat.

In accordance with another of the characteristics of the invention, both the nut corresponding to the spindle, and the external sleeve that transmits the rotary movement to the gate, shall each have a toothed crown wheel, said wheels being operable by means of bevel pinions, through respective reduction gear motors, electrical or hydraulic, in such a manner that the operating of one of them shall produce the valve opening-shutting action, and the operating of the other shall produce the rotary movement of the gate with respect to its seat, it being clear that both motors can work simultaneously, in such a manner that in the cleaning phase and as the scale is progressively removed by friction from the gate and from the valve seat, said gate shall gradually progress towards the seat, in order that this self-cleaning phase does not lose its efficacy.

With the convenient programming of the operation of the aforementioned motors, the valve self-cleaning can be done in a fully automatic form, as has been stated beforehand.

### DESCRIPTION OF THE DRAWINGS

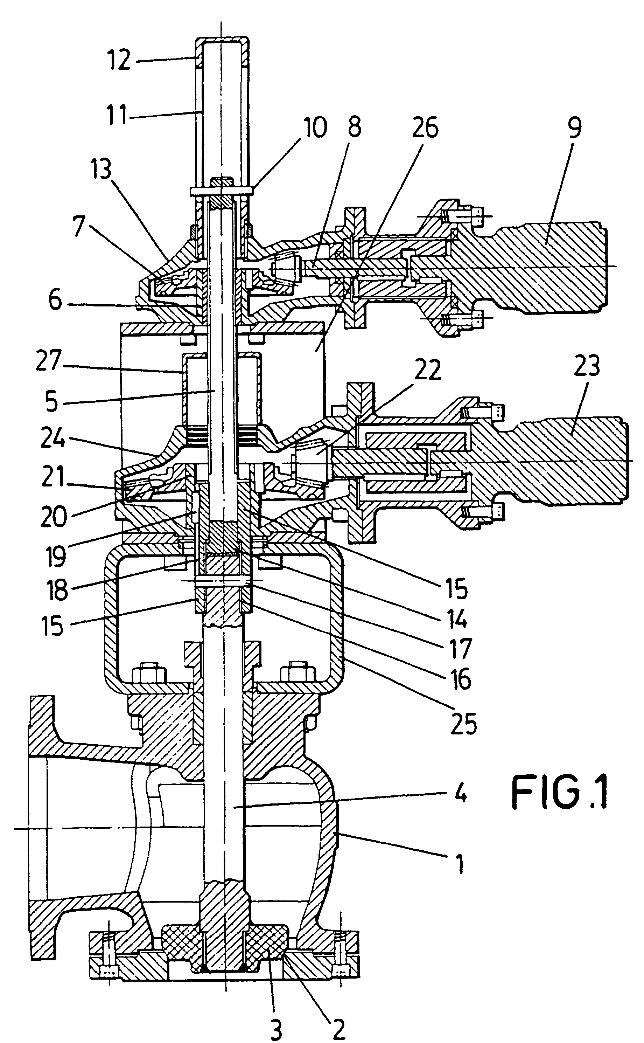

To complement this description and in order to assist in a better understanding of the characteristics of the invention, in accordance with a practical embodiment thereof, a single drawing sheet is attached forming an integral part of said description, the single figure on said drawing sheet being by way of illustration and not restrictive in nature, showing, according to a side elevation and in diametric cross section, a valve for alumina producing plants implemented in accordance with the purpose of the present invention, said valve appearing in the shut position.

### PREFERRED EMBODIMENT OF THE INVENTION

From the figure mentioned it may be seen how the valve which is being proposed is constituted of a valve body (1) in which is formed a valve seat (2) on which a gate (3) acts, said gate being conveniently in association with a shaft (4), axially displaceable by the action of a spindle (5) on which acts a nut (6), conveniently joined to a toothed crown wheel (7) which, via a bevel pinion (8), receives the movement of a reduction gear motor (9), all of this in such a way that the rotation of said reduction gear motor (9) in a determined direction produces the separation of the gate (3) with respect to the valve seat and its turning in the opposite direction produces similarly in the opposite direction the operation corresponding to shutting.

The spindle (5), equipped at its free end and opposite to the valve itself with a diametric pin (10), the ends of which run in grooves (11) operationally formed in a hood (12) extension of the casing (13) which houses the crown wheel (7) and the transmission pinion (8), grooves (11) which permit the amplitude of axial movement necessary to achieve the also necessary amplitude of displacement in the gate (3), is finished at its lower extremity with a small enlargement (14) by means of which it is held axially with respect to an intermediate sleeve (15), which, in an axial direction, immobilises the spindle (5) with respect to the shaft (4), but which nonetheless permits the free rotational movement of said shaft (4) with respect to the spindle (5).

In more specific terms. the sleeve (15) acts also as driving element for the shaft (4) for which it is not only attached to the latter by screw thread (16), but also with the collaboration of a diametric pin (17).

The sleeve (15) has a groove (18) in correspondence with one of its generators, in which sleeve runs a key (19) which, by permitting the free axial displacement of the sleeve ( 15), and consequently die free axial displacement of the assembly formed by the shaft (4) and the spindle (5), immobilises in an angular direction said sleeve (15) with respect to an external sleeve (20) to which is joined a toothed crown wheel (21), similar to the aforementioned crown wheel (7) which, through another bevel pinion (22), receives the movement of a second reduction gear motor (23), also similar to the reduction gear motor (9) already mentioned. This second transmission (21 - 22) is housed likewise in a casing (24) similar to the casing (13), the assembly of these elements being facilitated through the collaboration of brackets (25) and (26), fastened to each other and fastened to the valve body (1) itself, as can be seen in full detail in the figure. A dust guard cover (27) protects the transmission (21 - 22) mentioned, while permitting the necessary axial displacement of the sleeve (15).

In accordance with this construction and through the reduction gear motor (9), the axial displacement operations for opening and shutting the valve are performed on the gate (3), to which end said reduction gear motor (9) can be made to work by whatever appropriate means.

When it is periodically necessary to carry out a valve self-cleaning operation, the reduction gear motor (23) is brought into operation, preferably also in an automatic way, said reduction gear motor (23) being clearly in a position supporting the gate (3) on the valve seat (2), said position determined in turn by the reduction gear motor (9), the reduction gear motor (23) driving the lower shaft (4) in its rotary movement exclusively, whilst the upper spindle (5) is held immobile, and producing the intended friction effect of the gate (3) against the valve seat (2), operation in which the reduction gear motor (9) can also participate, in such a manner that in parallel with the rotary movement of the gate (3) a slight forward movement thereof is produced, complementing the progressive rubbing away of the deposits or scale present in the contact zones between the gate (3) and valve seat (2).

## Claims

1. Valve for alumina producing plants, which incorporates a valve body in which a seat is established on which acts a gate in association with a shaft which traverses the valve body and which by means of a spindle-nut type transmission, receives an axial displacement produced by whatever driving element that determines the approximation and separation operations of the valve seat with respect to the gate, gate which in turn is capable of receiving, in its shut position, a rotary movement determining a friction effect against the valve seat, for self-cleaning of the assembly, **characterised in that** the gate (3) is joined to a shaft (4) which is connected by its extremity opposite to said gate (3) with a spindle (5), said shaft (4) being immobilised axially with respect to the spindle (5), but capable of turning freely with respect to the latter, all this so that the displacement of the gate (3) for valve opening and shutting is performed by means of an axial displacement applied to the spindle-shaft assembly (5 - 4) via the spindle itself, whilst the rotary movement of the gate (3), in the self-cleaning operation, is received directly by the shaft (4), from a driving element (23) separate from the driving element (9) acting on the spindle (5).

2. Valve for alumina producing plants, in accordance with claim 1, **characterised in that** the shaft (4) and the spindle (5) are connected to each other through a common sleeve (15), which receives inside a slight enlargement (14) of the corresponding extremity of the spindle (5), permitting the free rotation of the latter with respect to said sleeve, while said sleeve (15) is rigidly fastened to the shaft (4), preferably by a screw thread (16) accompanied by a diametric pin (17).

3. Valve for alumina producing plants, in accordance with previous claims, **characterised in that** the sleeve (15) which connects the shaft (4) with the spindle (5) has a groove (18) along one of its generators, in which rests a key (19) in association with a second sleeve (20), enclosing the former and joined to a plate or crown wheel (21) through which, with the collaboration of a pinion (22), the shaft (4) and consequently the gate (3) receives the rotary movement of the driving element (23), all this so that the key (19), as well as transmitting the rotary movement to the gate, permits the necessary axial displacement of the assembly formed by the shaft (4), the spindle (5) and the sleeve ( 15) which connects them, in the valve opening and shutting operation.

4. Valve for alumina producing plants, in accordance with previous claims, **characterised in that** the nut (6) for the axial displacement of the spindle (5) is fastened to a plate or crown wheel (7) which, with the collaboration of a bevel pinion (8), is driven by the motor (9), with a transmission similar to that which applies the rotary movement to the gate (3), the spindle (5) being held immobile in the angular direction with the collaboration of a transversal pin (10), conveniently joined to the free end thereof, which runs in grooves (11) of a cover (12) duly joined to the casing (13) housing the pertinent transmission mechanisms.

5. Valve for alumina producing plants, in accordance with previous claims, **characterised in that** driving elements (9) and (23) are capable of acting together and automatically during the self-cleaning phase, in such a manner that whilst the motor (23) is applying a continuous rotary movement to the gate (3), the motor (9) is in turn applying to said gate a slow forward movement towards the valve seat (2), in the measure that the residual bauxite scale or deposits are being removed from these parts.

## Patentansprüche

1. Ventil für Anlagen zur Aluminiumoxydproduktion, das einen Ventilkörper umfasst, auf dem ein Sitz vorgesehen ist, auf den ein Verschlussorgan einwirkt, das mit einer durch den Ventilkörper verlaufenden Achse verbunden ist und über eine Übertragung in der Art einer Spindel-Mutter eine axiale Verschiebung erfährt, die durch ein beliebiges Antriebselement erzeugt wird und die Zustell- und Trennbewegungen des Ventilsitzes in Bezug auf das Verschlussorgan bewirkt, wobei das Verschlussorgan seinerseits in der Verschlusslage eine Drehbewegung erfahren kann, die eine Reibung gegen den Ventilsitz bewirkt, für die Selbstreinigung der Gesamtanordnung, **dadurch gekennzeichnet, dass** das Verschlussorgan (3) einstückig mit einer Achse (4) verbunden ist, die an ihrem dem genannten Verschlussorgan (3) gegenüberliegenden Ende mit einer Spindel (5) verbunden ist, wobei die genannte Achse (4) axial in Bezug auf die Spindel (5) arretiert ist, jedoch in Bezug auf die genannte Spindel frei drehen kann, so dass die Verschiebung des Verschlussorgans (3) für das Öffnen und Schließen des Ventils über eine axiale Verschiebung stattfindet, die durch die Einheit Spindel-Achse (5 - 4) über die Spindel selbst bewirkt wird, während die Drehbewegung des Verschlussorgans (3) bei dem Selbstreinigungsvorgang direkt auf die Achse (4) ausgeübt wird, von einem Antriebselement (23), das nicht dem auf die Spindel (5) einwirkenden Antriebselement (9) entspricht.

2. Ventil für Anlagen zur Aluminiumoxydproduktion nach Anspruch 1, **dadurch gekennzeichnet, dass** die Achse (4) und die Spindel (5) über eine gemeinsame Hülse (15) miteinander verbunden sind, die in ihrer Mitte eine leichte Ausdehnung (14) des entsprechenden Endes der Spindel (5) aufnimmt, und so das freie Drehen derselben in Bezug auf die genannte Hülse ermöglicht, wobei die genannte Hülse (15) gleichzeitig unbeweglich und in einem Stück mit der Achse (4) verbunden ist, vorzugsweise über ein Gewinde (16), das durch einen diametral verlaufenden Stift (17) ergänzt ist.

3. Ventil für Anlagen zur Aluminiumoxydproduktion nach den vorhergehenden Ansprüchen, **dadurch gekennzeichnet, dass** die Hülse (15), die die Achse (4) mit der Spindel (5) verbindet, eine Nut (18) auf einer ihrer Mantellinien aufweist, in der ein mit einer zweiten Hülse (20) verbundener Keil (19) eingreift, wobei die zweite Hülse die vorige Hülse umgreift und mit einem Teller oder einem Kranz (21) einstückig verbunden ist, mit dem sie in Zusammenwirkung mit einem Drehzapfen (22), der Achse (4) und folglich dem Verschlussorgan (3) eine Drehbewegung des Antriebselements (23) erfährt, so dass der Keil (19) nicht nur die Drehbewegung auf das Verschlusselement überträgt, sondern auch die notwendige axiale Verschiebung der Einheit aus Achse (4), Spindel (5) und der diese verbindenden Hülse (15) bei dem Öffnungs- und Schließvorgang des Ventils ermöglicht.

4. Ventil für Anlagen zur Aluminiumoxydproduktion nach den vorhergehenden Ansprüchen, **dadurch gekennzeichnet, dass** die Mutter (6) für die axiale Verschiebung der Spindel (5) einstückig mit einem Teller oder einem Kranz (7) verbunden ist, der zusammen mit dem konischen Drehzapfen (8) die Bewegung des Motor (9) aufnimmt, mit einer ähnlichen Übertragung, wie die, die die Drehbewegung auf das Verschlussorgan (3) überträgt, wobei die Spindel (5) winkelförmig festgelegt wird, in Zusammenwirkung mit dem Querstift (10), der auf geeignete Weise mit dem freien Ende der Spindel verbunden ist, und in Nuten (11) eines Deckels (12) eingreift, der auf geeignete Weise mit einem Gehäuse (13) verbunden ist, das die entsprechenden Übertragungsmechanismen enthält.

5. Ventil für Anlagen zur Aluminiumoxydproduktion nach den vorhergehenden Ansprüchen, **dadurch gekennzeichnet, dass** die Antriebselemente (9) und (23) während der Selbstreinigungsphase automatisch zusammenwirken, so dass, während der Motor (23) dem Verschlussorgan (3) eine ständige Drehbewegung überträgt, der Motor (9) seinerseits auf das Verschlussorgan eine langsame Vorwärtsbewegung in Richtung auf den Ventilsitz (2) überträgt, in dem Maße, in dem auf diesen Teilen die Verkrustungen und Restablagerungen von Bauxit entfernt werden.

## Revendications

1. Soupape destinée à des installations de production d'alumine incorporant un corps de soupape dans lequel on établit un siège sur lequel agit un obturateur associé à un axe qui traverse le corps de soupape et qui par l'intermédiaire d'une transmission de type broche-écrou, reçoit un déplacement axial généré par tout élément moteur et déterminant des manoeuvres de rapprochement et de séparation du siège de soupape par rapport à l'obturateur, qui à son tour, est apte à, lors d'une situation de fermeture, recevoir un mouvement giratoire déterminant d'un frottement contre le siège de soupape, pour l'auto-nettoyage de l'ensemble, **caractérisée en ce que** l'obturateur (3) est solidaire d'un axe (4) mis en rapport, par son extrémité opposée audit obturateur (3), avec une broche (5), ledit axe (4) étant immobilisé axialement par rapport à la broche (5), mais apte à tourner librement par rapport à celle-ci, tout cela de manière que le déplacement de l'obturateur (3) pour l'ouverture et la fermeture de la soupape soit mis en oeuvre au moyen d'un déplacement axial fournit à l'ensemble broche-écrou (5 - 4) à travers la propre broche, tandis que le mouvement giratoire de l'obturateur (3), lors de la manoeuvre d'auto-nettoyage, c'est l'axe (4) qui le reçoit directement d'un élément moteur (23) étranger à l'élément moteur (9) qui agit sur la broche (5).

2. Soupape destinée à des installations de production d'alumine, selon la revendication 1, **caractérisée en ce que** l'axe (4) et la broche (5) sont mis en rapport entre eux à travers une douille commune (15), qui reçoit en son sein une légère expansion (14) de l'extrémité correspondante de la broche (5), en permettant la rotation libre de celle-ci par rapport à ladite douille, ladite douille (15) se solidarisant, à la fois, de manière inamovible à l'axe (4), de préférence au moyen d'un filet (16) complémenté par une cheville diamétrale (17).

3. Soupape destinée à des installations de production d'alumine, selon les revendications antérieures, **caractérisée en ce que** la douille (15) qui met en rapport l'axe (4) avec la broche (5) comprend une rainure (18) sur une de ses génératrices, dans laquelle joue une clavette (19), associée à une deuxième douille (20), enveloppante de l'antérieure et solidarisée à un plateau ou couronne (21) à travers lequel, avec la collaboration d'un pignon (22), l'axe (4) et par conséquent l'obturateur (3) reçoivent un mouvement giratoire de l'élément moteur (23), tout cela de manière que la clavette (19), en outre, de transmettre le mouvement giratoire à l'obturateur, permette le déplacement axial nécessaire de l'ensemble constitué par l'axe (4), la broche (5) et la douille (15) qui les met en rapport lors de la manoeuvre d'ouverture et de fermeture de la soupape.

4. Soupape destinée à des installations de production d'alumine, selon les revendications antérieures, **caractérisée en ce que** le filet (6) pour le déplacement axial de la broche (5) reçoit solidairement un plateau ou couronne (7) qui, avec la collaboration d'un pignon conique (8), reçoit le mouvement du moteur (9), avec une transmission similaire à celle fournit par le mouvement giratoire à l'obturateur (3), la douille (5) demeurant immobilisée dans la direction angulaire avec la collaboration d'une cheville transversale (10), adéquatement solidarisée à l'extrémité libre de celle-ci, qui joue dans les rainures (11) d'un couvercle (12) dûment solidarisé à la carcasse (13) contenant les mécanismes de transmission correspondants.

5. Soupape destinée à des installations de production d'alumine, selon les revendications antérieures, **caractérisée en ce que** lés éléments moteurs (9) et (23) sont susceptibles d'agir conjointement et automatiquement pendant la phase d'auto-nettoyage, de manière que, pendant que le moteur (23) fournit à l'obturateur (3) un mouvement giratoire continu, le moteur (9) fournit à son tour, au dit obturateur un mouvement lent d'avance vers le siège de soupape (2), au fur et à mesure qu'a lieu dans ces pièces, l'élimination des incrustations ou dépôts résiduaires de bauxite.
